# EUROPEAN PATENT APPLICATION

(11) **EP 1 770 702 A2**
(43) Date of publication of application: **04.04.2007**
(21) Application number: 06005636.3
(22) Date of filing: 20.03.2006
(51) Int. Cl.: G11B 20/10

(54) **Method for transcribing music from music CD to MP3 player**

(30) Priority: 30.09.2005 CN 200510107421
(71) Applicant: MY3IA (Bei Jing) Technology Ltd., Hai Dian District Beijing 100086 (CN)
(72) Inventor: Shih, Hsuanming, Chungli City, Taoyuan Hsien (TW)
(74) Representative: Leske, Thomas

(57) **Abstract**

The present invention relates to a method for transcribing music from music CD to a MP3 player which comprises after the MP3 player being connected with the computer under the state of running through a standard data interface, the computer sending an enquiring message of the device's type to the MP3 player; the MP3 player responding the information of device's type to the computer; if the message representing the device with autorun function, the computer looking up and running the autorun file in the MP3 player, and autostarting the program for transcribing music data, the looking module of the program for transcribing music data looking up whether there is a music CD, if yes, then the taking module of the program for transcribing music data taking the track data of music from the music CD; the converting module of the program for transcribing music data converting the taken track data into the music file of MP3 format ; the storing module storing the file of MP3 format in the MP3 player. Using the method provided by the present invention the user can easily converts the music of the music CD in the computer into the MP3 format file and stores it in the MP3 player.

## Description

### Field of the Invention

The present invention relates to a method for transcribing music from music CD to a MP3 player, more particularly relates to a method for transcribing music from music CD in the CD driver to MP3 format, and storing the transcribed music in MP3 player by the autorun function in the case when the MP3 player is connected to computers.

### Background of the Invention

The expression "MP3" is the abbreviation of MPEG Audio Layer 3. MPEG compression format is a group of standards about pictures and sounds established by the Motion Picture Experts Group, in which MP3 is one kind of new standards for audio signal compression format. MP3 is one format for compressing audio signals with using Layer-3 compression mode of audio frequency in international standard and is also called "music in computer network" by Chinese. The sound quality of music compressed by MP3 is near the CD; however, the size of file is one twelfths of the CD.

The MP3 player is a playing tool capable of playing MP3 format file which is in small size, low power, good sound quality and plentiful styles; therefore, it's popular with people. However, there's a deficiency that is downloading music is complicated in MP3 player. Normal approach used in the prior art is running a rerecording software manually to transcribe the present music to MP3 format or other sound formats supported by the MP3 players, connecting the MP3 player with computers to perform a chain of choosing and copying etc operations, finally storing the transcribed music in the MP3 player. Although MP3 players are more popular, many people using music data don't know the operation of computer well. Therefore, the approach in regular use is becoming more and more inconvenient.

The present "line-in" technique solves the above-presented problem to some extent. The "line-in" technique is to plug one end of line to the MP3 player, the other end to earphone hole of CD, MD, and DVD etc, and then to transcribe the music playing in CD, MD and DVD audio players to the MP3 player. While original signal of line-in is not original music file recorded in music disk but analog signal outputted by the audio player, the quality of MP3 music file adopted with line-in technique is not as good as the quality of MP3 music file transcribed by the original music file on computer.

### Summary of the Invention

The object of the present invention aims at overcoming the deficiency of the prior art and is to provide a method for transcribing music from music CD to a MP3 player. The user plugs the MP3 player into the computer so that the music of the music CD in the computer is conveniently converted into MP3 format file and stored in the MP3 player.

To achieve the above-said object, the present invention provides a method for transcribing music from music CD to a MP3 player, wherein the MP3 player includes a standard interface, a controller and a storage means, the standard interface is used for connect the MP3 player with the computer; the controller is used for controlling the R/w of the storage means and exchanging data with the computer; the storage means includes the startup data area and the data storage area; the computer communicates with the MP3 player based on the standard data interface after the MP3 player is connected with the computer under the state of running through a standard data interface, and the method further comprises the steps of:
Step (1) the computer sending an enquiring message of the device' s type to the MP3 player;
Step (2) after receiving the enquiring message of the device' s type, the MP3 player returning the information of device's type to the computer;
Step (3) the computer discriminating whether the message of device's type is represented the device with autorun function or not, if "yes" , then executing step (5), else execute step (4);
Step (4) the computer setting the MP3 player to the device without autorun function, ending;
Step (5) the computer setting the device attribute of the MP3 player to the device with autorun function;
Step (6) the computer looking up whether there's autorun file available in the MP3 player or not, if "yes", then executing step (7); else ending;
Step (7) the computer running the script of autorun file to auto-start the program for transcribing music data;
Step (8)the looking module of the program for transcribing music data looking up whether there is a music CD available in the CD driver of the computer or not, if "yes", then executing step (9), else ending;
Step (9) the taking module of the program for transcribing music data taking the track data of music from the music CD;
Step (10) the converting module of the program for transcribing music data converting the taken track data into the music file of MP3 format;
Step (11) the storing module of the program for transcribing music data storing the file of MP3 format in the MP3 player, ending.

The taking module in the step (9) takes the track data of the music by turns, every time takes the track data of one music , outputs the data to the converting module, and then takes track data of next music till finishing taking track data of all music; the converting module in the step (10) converts the taken track data into MP3 format file by turns, every time finishing taking one music, outputs the converted MP3 format file to the storing module, and then converts track data of next music till finishing converting the track data of all music; the storing module in the step (11) stores the MP3 format files by turns.

The storing module in the step (11) includes the first storage sub-module and the second storage sub-module, the storing module stores the MP3 format files by turns is concretely described as following: the first storage sub-module builds a file folder in the computer locally, and stores MP3 format file of each piece of music in the file folder; after the first storage sub-module finishing storing the MP3 format file of the first music, the second storage sub-module begins to copy the MP3 format file in the local file folder of the computer to the MP3 player till finishing copying all files of MP3 format.

Therefore, the method of the present invention can easily converts the music of the music CD into the MP3 format files and stores them in the MP3 player. During the program for transcribing the music of the music CD, the operation of taking music data, converting format and storing file are paralleling performed so that the faster speed can be guaranteed. The converted files are stored in the file folder set with serial number of the music CD so that the data can be looked up and used conveniently.

The solution provided by the present invention will be better understood from following detailed description of preferred embodiments of the invention with reference to the drawings.

### Brief Description of the Drawings

FIG. 1 is first embodiment's flowchart of the present invention of a method for transcribing music from a music CD to a MP3 player.
FIG. 2 is second embodiment's flowchart of the present invention of a method for transcribing music from a music CD to a MP3 player.
FIG. 3 is third embodiment's flowchart of the present invention of a method for transcribing music from a music CD to a MP3 player.
FIG. 4 is one flowchart of fourth embodiment of the present invention of a method for transcribing music from a music CD to a MP3 player.
FIG.5 is another flowchart of fourth embodiment of the present invention of a method for transcribing music from a music CD to a MP3 player.

### Detailed Description of the Preferred Embodiments

The present invention discloses a method for transcribing music from a music CD to a MP3 player. Only one thing the user needs to do is to connect the MP3 player to the computer, then the music of the music CD is transcribed to MP3 format and stored in the MP3 player.

The MP3 player includes a standard data interface, a controller and a storage means. In which the standard data interface is the interface which is used to transmit data between the MP3 player and the computer. It may be universal serial bus, USB interface. The controller is used to control R/W of the storage and exchanging data with the computer. The storage is used to store the data. It includes a startup data area for storing autorun file Autorun. ini, the program for transcribing music data specified to run in the autorun file and music data to be exchanged etc. In addition, the storage means also includes one or multiple data storage areas in which the music files and programs specified to run by autorun file Autorun.ini etc are stored.

Before transcribing the music, the autorun file Autorun.ini is needed to compile and the program for transcribing music data is set to autorun in the file, and then the autorun file Autorun.ini and the program for transcribing music data etc are written in the startup data area.

The program for transcribing music data comprises looking module for looking music data, taking module for taking track data, converting module for converting the taken track data into MP3 format and storing module for storing the converted MP3 file.

The computer communicates with the MP3 player based on the standard data interface after the MP3 player is connected with the running computer through the standard data interface, and the method further comprises the steps of:
Step (1) the computer sending an enquiring message of the device's type to the MP3 player;
Step (2) after receiving the enquiring message of the device' s type, the MP3 player responding the information of device's type to the computer;
Step (3) the computer discriminating whether the information of device's type is represented the device with autorun function or not, if "yes", then executing step (5), else execute step (4);
Step (4) the computer setting the MP3 player to the device without autorun function;
Step (5) the computer setting the device attribute of the MP3 player to the device with autorun function;
Step (6) the computer looking up whether there's autorun file available in the MP3 player or not, if "yes", then executing step (7); else ending;
Step (7) the computer running the script of autorun file to auto-start the program for transcribing music data;
Step (8) the looking module of the program for transcribing music data looking up whether there is a music CD available in the CD driver of the computer or not, if "yes", then executing step (9), else ending;
Step (9) the taking module of the program for transcribing music data taking the track data of music from the music CD;
Step (10) the converting module of the program for transcribing music data converting the taken track data into the music file of MP3 format;
Step (11) the storing module of the program for transcribing music data storing the file of MP3 format in the MP3 player, ending.

### Exemplary embodiment 1

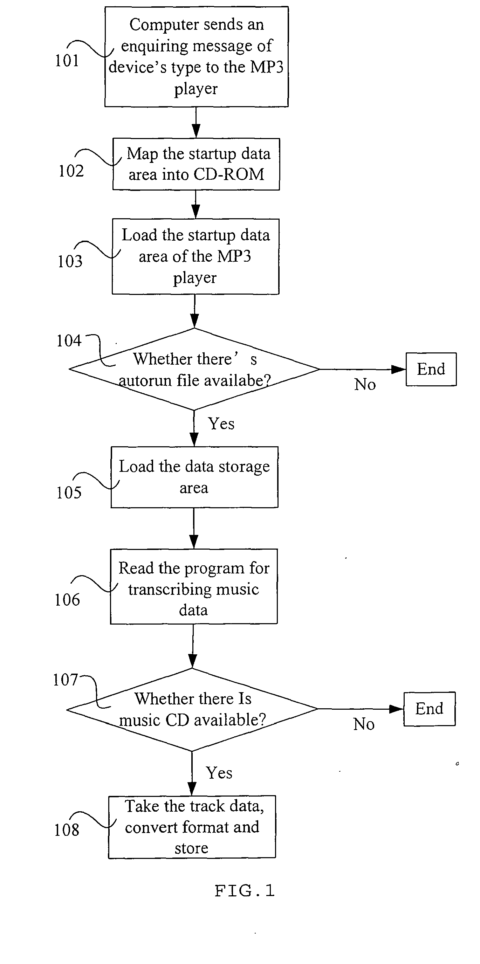

As shown in FIG.1, the steps of the embodiment are as following:
Step (101) after the user plugs the MP3 player into the computer, the computer sends an enquiring message of device's type to the MP3 player;
Step (102) after the MP3 player receives the enquiring message of device's type, it maps the startup data area into CD-ROM, and informs the information which is that the device is CD-ROM to the computer;
Step (103) after the computer receives the information of the device being the CD-ROM, it loads the startup data area of the MP3 player;
Step (104) the computer looks up whether there's autorun file Autorun. ini available in the startup data area or not, if "yes", then executes step (105), else end;
Step (105) the computer loads the data storage areas of the MP3 player in accordance with the script of the autorun file Autorun.ini;
Step (106) the computer reads the program for transcribing music data in accordance with the script of the autorun. ini autorun file, and runs the program;
Step (107) the looking module of the program for transcribing music data looks up whether there is a music CD available in the driver of the computer or not, if "yes", then executes step (108), else end;
Step (108) the taking module of the program for transcribing music data takes the track data of music from the music CD, the converting module converts the taken track data into the file of MP3 format, and the storing module stores the MP3 file in the MP3 player.

The above-presented solution realizes auto-starting the program for transcribing music data after the MP3 player is plugged into the USB interface of the computer, during the whole transcribing process, there's no user's operation.

### Exemplary embodiment 2

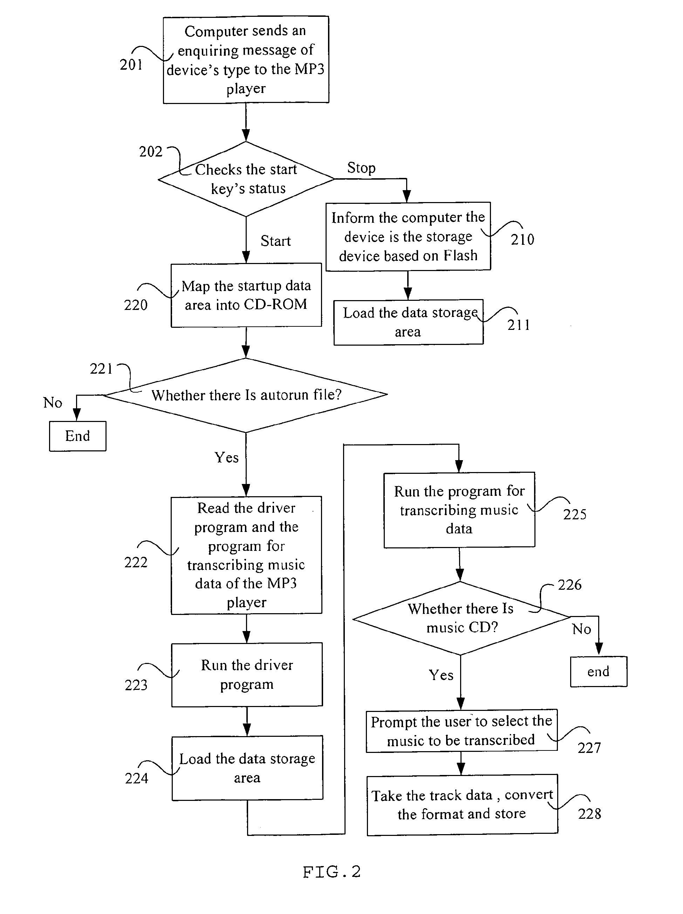

As shown in FIG. 2, the steps of the embodiment comprises are as following:
Step (201) after the user plugs the MP3 player into the computer, the computer sends an enquiring message of device's type to the MP3 player;
Step (202) after receiving the enquiring message of device's type, the MP3 player checks the start key's status of the program for transcribing music data, if the status of the start key is stop, then executes step (210) ; else if the status of the start key is on, then executes step (220);
Sometimes, user plugs the MP3 player into the computer not for transcribing music but for performing operation of transmitting file etc. Therefore, in order to avoid un-required transcription of music, a control key is set on the MP3 player to control whether to run the autorun function or not. After the MP3 player is plugged into the computer, the control key is set to be the auto-start key of the program for transcribing music data, which can be combined use with other function keys or be a control key with specific setting. When the key is on the status of start, the computer auto-starts the program for transcribing music data;
Step (210) the MP3 player responds the message to the computer and informing the computer the device is the storage device based on Flash;
   the start key being on the status of stop represents that the user doesn't want to transcribing music, therefore, the MP3 player is mapped into flash-based storage device;
Step (211) the operation system of the computer loading the data storage area, ending;
Step (220) the MP3 player maps the startup data area into CD-ROM, responds the message to the computer to inform the computer the device is CD-ROM and then the startup data area is loaded;
Step (221) the operation system searches whether there is the autorun file Autorun.ini in the startup data area or not, if "yes", then executes step (222), else end;
Step (222) the operation system reads the driver program and the program for transcribing music data of the MP3 player in accordance with the script in the autorun file Autorun.ini;
Step (223) the operation system runs the driver program, and updates the driver by default of operation system into the driver program of the MP3 player;
Step (224) the operation system loads the data storage area of the MP3 player in accordance with the script in the autorun file Autorun.ini;
Step (225) the operation system runs the program for transcribing music data in accordance with the script in the autorun file Autorun.ini;
Step (226) the looking module of the program for transcribing music data searches whether there is the music CD in the disk driver of the computer or not, if yes, then executes step (227), else end;
Step (227) the program for transcribing music data prompts the user to select the music to be transcribed;
   there is much music in the music CD, occasionally, users want to transcribe several music of them to the MP3 player, before taking the track data, first the user is enquired which music is needed to be transcribed and then the operation with user's selection is performed;
Step (228) the taking module of the program for transcribing music data taking the track data of the music selected by the user from the music CD, the converting module converting the taken track file into MP3 format, and the storing module storing the MP3 file in the MP3 player.

For each piece of music, taking track, converting format and storing these three steps is run by turns.

For transcribing several pieces of music, the taking module, the converting module and the storing module work respectively. The taking module takes the track data of each piece of music orderly, after taking the track data of one piece of music, the data is transmitted to the converting module, then takes next piece of music' s track data till finishing taking all music selected by user. The converting module converts the taken track data of each piece of music into MP3 file orderly, after finishing converting one piece of music, the converted MP3 file is transmitted to the storing module, and then converts next piece of music's track data till finishing converting all music's track data. The storing module stores each MP3 file in the MP3 player orderly.

The above-presented solution realizes that whether to auto-start the running of program for transcribing music data is controlled by the user, therefore, un-required transcription of music is avoided. Exemplary embodiment 3

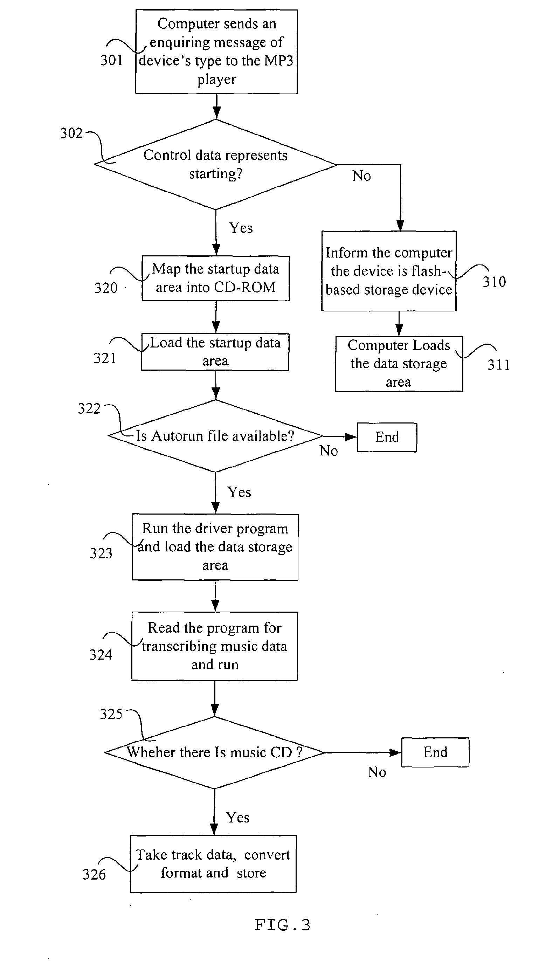

As shown in FIG.3, The steps of the embodiment areas following:
Step (301) after the user plugs the MP3 player into the computer, the computer sends an enquiring message of device's type to the MP3 player;
Step (302) after the MP3 player receives the enquiring message of device's type, reads the control data and discriminates whether the data is represented starting autorun of the program for transcribing music data or not, if yes, then execute step (320) ; else execute step (310) ;
   To avoid music transcription un-required by the user, the approach of setting control data may be adopted too. The MP3 player discriminates whether to start autorun function or not in accordance with control data, if the control data is "1" , then the autorun function is started; else if the control data is "0" , then the autorun function is stop. When the autorun function is started, the startup data area is needed to be mapped into CD-ROM;
Step (310) the MP3 player responds the message to the computer to informs the computer the device is flash-based storage device;
Step (311) the operation system of the computer loads the data storage area;
Step (320) the MP3 player maps the startup data area into CD-ROM, responds the message to the computer to informs the computer the device is CD-ROM;
Step (321) the operation system of the computer loads the startup data area;
Step (322) the computer searches the autorun file Autorun.ini in the startup data area, if available, then execute step (323); else end;
Step (323) the operation system runs the MP3 driver program and loads the data storage area in accordance with the script in the autorun file Autorun.ini;
Step (324) the operation system reads the program for transcribing music data from the data storage area and start running the program in accordance with the script in the autorun file Autorun.ini;
Step (325) the looking module of the program for transcribing music data searches whether there is a music CD in the disk driver of the computer or not, if yes, then execute step (326),else end; Step (326) the taking module of the program for transcribing music data takes track data from the music CD, the converting module converts the taken music data into MP3 file, and the storing module stores the MP3 file in the computer and the MP3 player.
   The taking module, the converting module and the storing module perform their operation without interference. For the speed of storing information into the MP3 player is relatively slow, the converted file is firstly stored in the computer before being stored in the MP3 player. So the storing module also comprises the first storage sub-module and the second storage sub-module. When the file is being stored, the first storage sub-module firstly establishes a file folder named with the music CD' s serial number in the computer locally, and then the converted MP3 files are kept being stored in above-said file folder by turns till all MP3 files are finished storing. After the first storage sub-module stores the first MP3 file in the file folder, the second storage sub-module begins copying the MP3 file of this file folder to the MP3 player till all MP3 files are finished copying.

After the converted MP3 files are stored in the file folder named with the music CD' s serial number in the computer, if the user demands to transcribe music files from the same music CD, just the converted MP3 files are directly stored into the MP3 player without taking track and converting format again. After The taking module of the program for transcribing music data finds the music CD, it searches the file folder named with the music CD's serial number in the computer, discriminates whether the file folder is available or not, if yes, then directly copy the MP3 file in it, else perform the operation of taking track, converting format and storing file.

### Exemplary embodiment 4

When storing the MP3 file, the file name may use the track number so that the music file can be discriminated by the track number in the corresponding file folders named with CD serial number. Otherwise, the file name also may use the combination form of the serial number and track number so that each converted MP3 file stored in the computer will have a unique file name. When the computer connects with the internet, the music name of every piece of music can be got from the CDDB (Internet Compact Disc Database) of internet and be used to name the file.

The file and the file folder are named with definite formula so that the user can conveniently find the converted files and when converting the same music CD, the user directly copy the demanded file to the MP3 player so as to save the time for taking data and converting format.

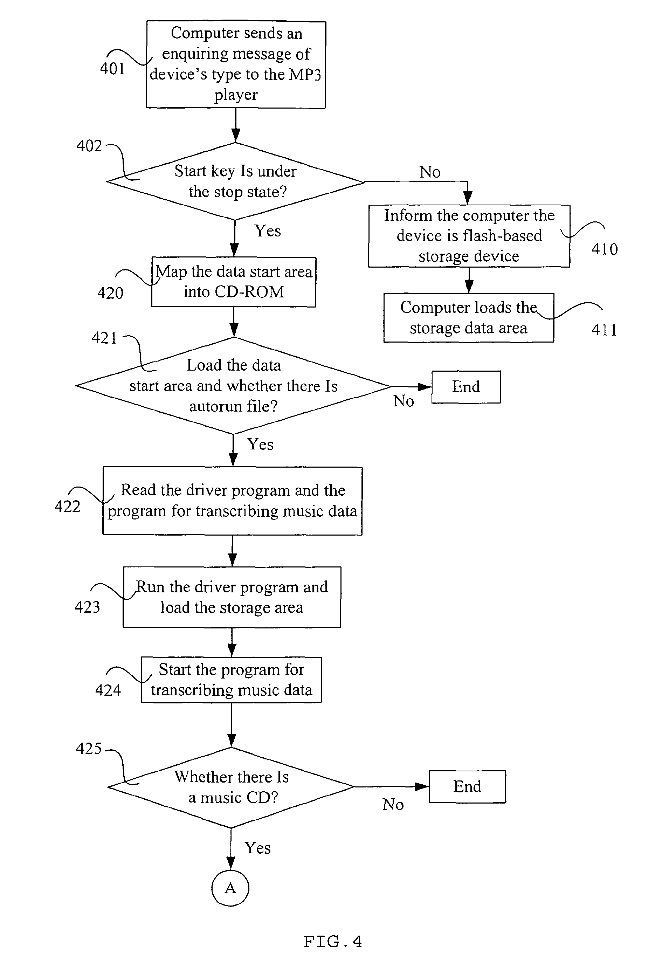

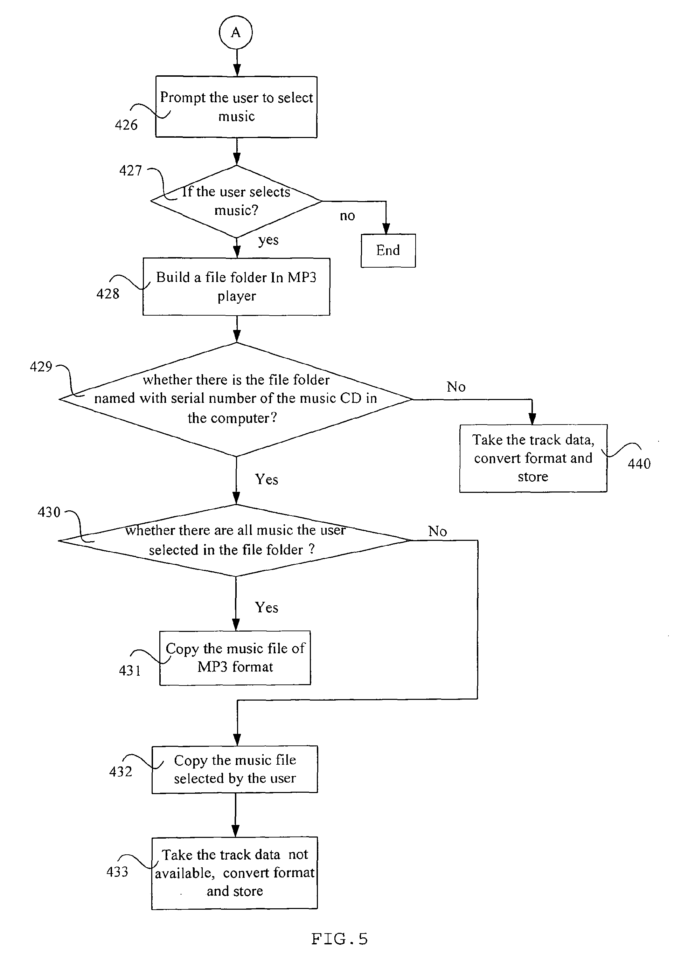

The flowchart of the embodiment is divided into two parts as shown in FIG.4 and FIG.5, the drawing sign A is the joint of two drawings.

As shown in FIG.4 and FIG.5, the steps of this embodiment are as following:
Step (401) after the user plugs the MP3 player into the computer, the computer sends an enquiring message of device's type to the MP3 player;
Step (402) after the MP3 player receives the enquiring message of device's type, it checks the state of the start key of program for transcribing music data to discriminate whether the start key is under the stop state or not, if yes, then execute step(410); else if the start key is under the start state, then execute step (420);
Step (410) the MP3 player responds the message to the computer to informs the computer the device is flash-based storage device;
Step (411) the operation system of the computer loads the storage data area, ending;
Step (420) the MP3 player maps the data start area into CD-ROM, and responds the message to inform the computer that the device is CD-ROM;
Step (421) the operation system of the computer loads the data start area and searches the autorun file Autorun. ini in the data start area, if there is autorun file, then execute step (422); else end;
Step (422) the computer reads the driver program of the MP3 player and the program for transcribing music data according to the script in the autorun file Autorun.ini;
Step (423) the computer runs the driver program and updates driver program by default of the operation system to the driver program of the MP3 player and loads the storage area according to the script in the autorun file Autorun.ini;
Step (424) the computer starts the program for transcribing music data according to the script in the autorun file Autorun.ini;
Step (425) the looking module of the program for transcribing music data searches whether there is a music CD in the disk driver of the computer or not, if yes, then execute step (426), else end;
Step (426) the looking module of the program for transcribing music data prompt the user which music needed to be rerecorded;
Step (427) if the user selects the music, then execute step (428), else end;
Step (428) the second sub-storing module of the storing module in the program for transcribing music data builds a file folder named with serial number of the music CD;
step (429) the looking module of the program for transcribing music data looks up whether there is the file folder named with serial number of the music CD in the hard disk of the computer or not, if yes, then execute step (430), else execute step (440);
step (430) the looking module of the program for transcribing music data discriminates whether there are all music the user selected in the file folder named with serial number of the music CD in the computer or not; if yes, then execute step (431), else execute step (432);
step (431) the second sub-storing module copies the music file of MP3 format selected by the user in the file folder in the computer to the corresponding file of the MP3 player, end;
   the storing module includes the first storage sub-module for storing the file in the computer and the second storage sub-module for copy the file to the MP3 player;
step (432) the second storage sub-module directly copies the music file selected by the user in the file folder named with the music CD in the computer to the file folder named with the music of the MP3 player;
step (433) together with the second storage sub-module copying the file, the taking module takes the track file of music needed by the user but not available in the file folder of the computer, the converting module converts the taken track file into MP3 format file; the first storage sub-module stores the MP3 format file in the file folder named with the music CD in the computer; after finishing copying the MP3 file available in the computer, the second storage sub-module keeps on copying the just converted MP3 format file till finishing copy the MP3 files of all music selected by the user, end;
step (440) the taking module of the program for transcribing music data takes the track data from the music CD, the converting module converts the taken track data into MP3 format, the first storage sub-module stores the MP3 file in the file folder named with the music CD in the computer, the second storage sub-module copies the MP3 files in the file folder to the file folder named with the music CD in the MP3 player.

The taking module, the converting module and the storing module perform their operation without interference. The converted file and the file folder to store the converted file are named with definite formula so that the user can conveniently find the converted files and the operation of taking track and converting format to all music needed by user is not necessary so as to save the time.

The above-presented solution may also be used in other mobile storage devices, such as USB storage device, mobile hard disk and Personal Digital Assistant etc, the converted format except MP3 format may use WAV format, WMA format and RA format etc.

It should be understood that the above embodiments are used only to explain, but not to limit the present invention. In despite of the detailed description of the present invention with referring to above preferred embodiments, it should be understood that various modifications, changes or equivalent replacements can be made by those skilled in the art without departing from the spirit and scope of the present invention and covered in the claims of the present invention.

## Claims

1. A method for transcribing music from music CD to a MP3 player,
wherein computer communicates with the MP3 player based on the standard data interface after the MP3 player is connected with the computer under the state of running through a standard data interface,
and the method comprises the following steps:
Step (1) the computer sending an enquiring message of the device's type to the MP3 player;
Step (2) after the MP3 player receiving the enquiring message of the device's type, responding the information of device's type to the computer;
Step (3) the computer discriminating whether the message of device' s type represents the device with autorun function or not, if "yes", then executing step (5), else executing step (4);
Step (4) the computer setting the MP3 player to the device without autorun function, ending;
Step (5) the computer setting the device attribute of the MP3 player to the device with autorun function;
Step (6) the computer looking up whether there's autorun file available in the MP3 player or not, if "yes", then executing step (7); else ending;
Step (7) the computer running the script of autorun file to auto-start the program of transcription of music data;
Step (8)the looking module of the program for transcribing music data looking up whether there is a music CD available in the CD driver of the computer or not, if "yes", then executing step (9), else ending;
Step (9) the taking module of the program for transcribing music data taking the track data of music from the music CD;
Step (10) the converting module of the program for transcribing music data converting the taken track data into the music file of MP3 format;
Step (11) the storing module of the program for transcribing music data storing the file of MP3 format in the MP3 player, ending.

2. The method as claimed in claim 1, wherein said step (2) is concretely described as following: after the MP3 player receives the enquiring message of device's type, it maps the startup data area of the MP3 player into CD-ROM, and informs the information which is that the device is CD-ROM to the computer.

3. The method as claimed in claim 1, wherein a control key of the MP3 player is set to be a auto-start key of the program for transcribing music data after the MP3 player is connected with the computer under the state of running through a standard data interface, and the step (2) is concretely described as following: after the MP3 player receives the enquiring message of device's type, said MP3 player detects whether the control key is under the state of autostart of the program for transcribing music data, if yes, then responds to the computer the device's type message which represents that the device is CD-ROM; else responds to the computer the device's type message which represents that the device is flash-based storing module.

4. The method as claimed in claim 3, wherein the step of said set is as following: a control key of the MP3 player is multi-used set to the autostart key of the program for transcribing music data.

5. The method as claimed in claim 1, wherein a control data is stored in a storage of said MP3 player, said step (2) is concretely described as following: after receiving the enquiring message of device' s type, said MP3 player detects whether said control data represents said MP3 player is under the autostart state of the program for transcribing music data, if "yes", then responds to the computer the device's type message which represents that the device is CD-ROM; else responds to the computer the device's type message which represents that the device is flash-based storing module.

6. The method as claimed in claim 1, wherein in said step (8), if there is a music CD, then user is prompted to choose music needed to be transcribed and executes step (9) ; said step (9) is concretely described as following: the taking module of the program for transcribing music data takes the track data of the music selected by the user from the music CD.

7. The method as claimed in claim 1, wherein the taking module in said step (9)takes the track data of the music by turns, every time takes the track data of one music , outputs the data to the converting module, and then takes track data of next music till track data of all music is finished taking; the converting module in said step (10) converts the taken track data into MP3 format file by turns, every time finishing taking one music, outputs the converted MP3 format file to the storing module, and then converts track data of next music till finishes converting the track data of all music; the storing module in said step (11) stores the MP3 format file by turns.

8. The method as claimed in claim 7, wherein the storing module in said step (11) includes the first storage sub-module and the second storage sub-module, said storing module storing the MP3 format file by turns is concretely described as following: the first storage sub-module builds a file folder in the computer locally, and stores MP3 format file of each piece of music in local file folder of the computer; after finishing storing the MP3 format file of the first music in the first storage sub-module, the second storage sub-module begins to copy the MP3 format file in said local file folder of the computer to the MP3 player by turns till finishing copying all files of MP3 format.

9. The method as claimed in claim 8, wherein said first storage sub-module building a file folder in the computer locally is concretely described as following: said first storage sub-module sets the file folder in the computer locally according to the serial number of said music CD.

10. The method as claimed in claim 8, wherein said storing MP3 format file of each piece of music in local file folder of the computer is concretely described as following: storing the MP3 format file of each piece of music in the local file folder of the computer according to the music name.

11. The method as claimed in claim 8, wherein said second storage sub-module beginning to copy the MP3 format file in said local file folder of the computer to the MP3 player by turns is concretely described as following: said second storage sub-module sets up a file folder named with serial number of the music CD, and copies the MP3 format files in said local file folder of the computer to the file folder named with serial number of the music CD in said MP3 player.
